# EUROPEAN PATENT APPLICATION

(11) **EP 4 749 555 A1**
(43) Date of publication of application: **27.05.2026**
(21) Application number: 24841960.8
(22) Date of filing: 25.03.2024
(51) Int. Cl.: G06Q 20/40, G06Q 20/38, G06Q 20/36

(54) **ENHANCED PAYMENT VERIFICATION METHOD, APPARATUS AND SYSTEM, AND SERVER AND MEDIUM**

(30) Priority: 20.07.2023 CN 202310898033
(71) Applicant: China Unionpay Co., Ltd., Shanghai 200135 (CN)
(72) Inventor: LIU, Lizhi, Shanghai 200135 (CN); TONG, Zhichen, Shanghai 200135 (CN); JIANG, Haijian, Shanghai 200135 (CN); MIN, Qing, Shanghai 200135 (CN); LI, Jia, Shanghai 200135 (CN); SHANG, Shuai, Shanghai 200135 (CN)
(74) Representative: Körfer, Thomas
(86) International application number: PCT/CN2024/083498
(87) International publication number: WO 2025/015958

(57) **Abstract**

The present application relates to the field of electronic payment. Disclosed are an enhanced payment verification method, apparatus and system, and a server and a medium. The method comprises: when payment is initiated, receiving a verification decision request sent by an electronic wallet platform on the basis of a barcode payment function of a payment application program in which an electronic wallet is embedded, wherein the electronic wallet platform comprises a background server of a built-in electronic wallet of a terminal device; generating a decision application request on the basis of the verification decision request, and sending the decision application request to a verification decision platform; receiving an enhanced verification mode fed back by the verification decision platform in response to the decision application request; sending the enhanced verification mode to the electronic wallet platform, so as to make the electronic wallet platform perform enhanced verification according to the enhanced verification mode, in order to obtain a verification result; and when the verification result indicates that the enhanced verification is successful, interacting with a resource management server to complete the payment.

## Description

### CROSS-REFERENCE TO RELATED APPLICATION

This application claims priority to Chinese Patent Application No. 202310898033.1, filed on July 20, 2023, entitled "Enhanced Payment Verification Method, Apparatus, Server, System And Medium", the entire content of which is incorporated herein by reference.

### FIELD OF THE DISCLOSURE

The application relates to the field of electronic payment and, more particularly, to a method, apparatus, server, system, and medium for enhanced payment verification.

### BACKGROUND

With the continuous development of electronic information, electronic payment has become a mainstream direction in payment technology. Due to the advantages of terminal devices, such as mobility, speed, and security, electronic payment processing has shifted from computer processing to terminal device processing. Terminal device operating systems typically come with built-in electronic wallets (e-wallets), allowing users to link bank cards for payments. Furthermore, due to the convenience of barcode payments, users may also install payment application programs on their terminal devices to make payments by scanning QR codes. To expand the usage of the e-wallets built into terminal devices, the barcode payment capabilities of payment application programs may be integrated into the e-wallet, enabling users to utilize the barcode payment capabilities of payment application programs through their e-wallets.

When making barcode payments via e-wallets, enhanced user verification is required to control payment security. The decision to implement enhanced verification rests with the entity making the barcode payment, which is the e-wallet. The e-wallet is owned by the device manufacturer of the terminal device, but the device manufacturer's security level is relatively low, increasing the risk of enhanced verification and reducing payment security.

### SUMMARY

The present disclosure provides an enhanced payment verification method, apparatus, server, system and medium, which may strengthen the control of risks associated with enhanced verification and improve payment security.

In a first aspect, an embodiment of the disclosure provides an enhanced payment verification method, applied to a payment transfer platform. The method includes: when a payment is initiated, receiving a verification decision request sent by an e-wallet platform based on a barcode payment function of a payment application program embedded in an e-wallet; the e-wallet platform including a backend server of the e-wallet built into the terminal device; generating a decision-seeking request based on the verification decision request and sending the decision-seeking request to a verification decision platform; receiving an enhanced verification mode from the verification decision platform in response to the decision-seeking request; sending the enhanced verification mode to the e-wallet platform so that the e-wallet platform performs enhanced verification according to the enhanced verification mode to obtain a verification result; and, if the verification result indicates that the enhanced verification is successful, interacting with a resource management server to complete the payment.

In a second aspect, an embodiment of the disclosure provides an enhanced payment verification method, applied to an e-wallet platform. The e-wallet platform includes a backend server for an e-wallet built into a terminal device. The method includes: when a payment is initiated, sending a verification decision request to a payment transfer platform based on a barcode payment function of a payment application program embedded in the e-wallet, so that the payment transfer platform generates a decision-seeking request based on the verification decision request and sends the decision-seeking request to a verification decision platform; receiving an enhanced verification mode sent by the payment transfer platform, where the enhanced verification mode is determined by the verification decision platform based on the decision-seeking request; interacting with the terminal device to perform enhanced verification according to the enhanced verification mode to obtain a verification result; and feeding back the verification result to the payment transfer platform, so that the payment transfer platform interacts with a resource management server to complete the payment if the verification result indicates that the enhanced verification is successful.

In a third aspect, an embodiment of the disclosure provides an enhanced payment verification apparatus applied to a payment transfer platform. The apparatus includes: a receiving module, configured to receive a verification decision request sent by an e-wallet platform based on a barcode payment function of a payment application program embedded in the e-wallet when a payment is initiated, the e-wallet platform including a backend server of an e-wallet built into a terminal device; a request generation module, configured to generate a decision-seeking request based on the verification decision request; a transmission module, configured to send the decision-seeking request to a verification decision platform, where the receiving module is further configured to receive an enhanced verification mode fed back by the verification decision platform in response to the decision-seeking request, the transmission module is further configured to send the enhanced verification mode to the e-wallet platform so that the e-wallet platform performs enhanced verification according to the enhanced verification mode to obtain a verification result, and the transmission module is further configured to interact with a resource management server to complete the payment when the verification result indicates that the enhanced verification is successful.

In a fourth aspect, an embodiment of the disclosure provides an enhanced payment verification apparatus applied to an e-wallet platform. The e-wallet platform includes a backend server for an e-wallet built into a terminal device. The apparatus includes: a transmission module, configured to send a verification decision request to a payment transfer platform based on a barcode payment function of a payment application program embedded in the e-wallet when a payment is initiated, so that the payment transfer platform generates a decision-seeking request based on the verification decision request and sends the decision-seeking request to a verification decision platform; a receiving module, configured to receive an enhanced verification mode sent by the payment transfer platform, the enhanced verification mode being determined by the verification decision platform based on the decision-seeking request; a verification module, configured to interact with the terminal device and perform enhanced verification according to the enhanced verification mode to obtain a verification result, where the transmission module is also configured to feed back the verification result to the payment transfer platform, so that the payment transfer platform interacts with a resource management server to complete the payment when the verification result indicates that the enhanced verification is successful.

In a fifth aspect, an embodiment of the disclosure provides a server applied to a payment transfer platform, the server including: a processor and a memory storing computer program instructions, where the enhanced payment verification method of the first aspect is implemented when the processor executes the computer program instructions.

In a sixth aspect, an embodiment of the disclosure provides a server applied to an e-wallet platform, the server including: a processor and a memory storing computer program instructions, where a method for enhanced payment verification in the second aspect is implemented when the processor executes the computer program instructions.

In a seventh aspect, an embodiment of the disclosure provides an enhanced payment verification system, including: a payment transfer platform for performing the enhanced payment verification method of the first aspect; and an e-wallet platform for performing the enhanced payment verification method of the second aspect.

In an eighth aspect, an embodiment of the disclosure provides a computer-readable storage medium storing computer program instructions that, when executed by a processor, implement the enhanced payment verification method of the first aspect or the enhanced payment verification method of the second aspect.

The disclosure provides a method, apparatus, server, system, and medium for enhanced payment verification. When a payment is initiated, the payment transfer platform of the payment transferor may receive a verification decision request sent by an e-wallet platform based on the barcode payment function of a payment application program embedded in the e-wallet. Based on this verification decision request, the platform generates a decision-seeking request and sends the decision-seeking request to the verification decision platform, enabling the verification decision platform to allocate an appropriate enhanced verification mode for the payment based on the decision-seeking request. The payment transfer platform may forward the enhanced verification mode from the verification decision platform to the e-wallet platform, allowing the e-wallet platform to perform enhanced verification according to this enhanced verification mode, verifying the authenticity of the user's identity. If the enhanced verification is successful, the payment process continues to complete the payment. In this process, the implementation of enhanced verification is carried out by the e-wallet platform of the terminal device manufacturer, but the decision on the enhanced verification mode is made by both the payment transfer platform and the verification decision platform of the payment transferor. The payment transferor itself is responsible for the transfer of payments, resulting in a higher security level and stronger risk control. This allows for a higher level of enhanced verification security corresponding to the determined enhanced verification mode, thereby improving payment security.

### BRIEF DESCRIPTION OF THE DRAWINGS

To more clearly illustrate the technical solutions of the embodiments of the disclosure, the accompanying drawings used in the embodiments of the disclosure will be briefly introduced below. For those skilled in the art, other drawings may be obtained based on these drawings without making creative efforts.
FIG. 1 is a schematic diagram of an example scenario architecture of an enhanced payment verification method provided in an embodiment of the first aspect of the disclosure;
FIG. 2 is a schematic diagram of an example of the display interface of an e-wallet provided in an embodiment of the first aspect of the disclosure;
FIG. 3 is a schematic diagram of another example of the scenario architecture of the enhanced payment verification method provided in an embodiment of the first aspect of the disclosure;
FIG. 4 is a flowchart of an enhanced payment verification method provided in an embodiment of the first aspect of the disclosure;
FIG. 5 is a flowchart of an enhanced payment verification method provided in an embodiment of the second aspect of the disclosure;
FIG. 6 is a flowchart of an example of the payment process provided in an embodiment of the disclosure;
FIG. 7 is a flowchart of an example of the scanned-to-pay process provided in an embodiment of the disclosure;
FIG. 8 is a flowchart of an example of the scanning-to-pay process provided in an embodiment of the disclosure;
FIG. 9 is a schematic structural diagram of an enhanced payment verification apparatus provided in an embodiment of the third aspect of the disclosure;
FIG. 10 is a schematic structural diagram of an enhanced payment verification apparatus provided in an embodiment of the fourth aspect of the disclosure; and
FIG. 11 is a schematic structural diagram of a server provided in an embodiment of the fifth aspect of the disclosure.

### DETAILED DESCRIPTION

The features and exemplary embodiments of various aspects of the disclosure will be described in detail hereinafter. To make the objectives, technical solutions, and advantages of the disclosure clearer, the disclosure will be further described in detail below with reference to the accompanying drawings and specific embodiments. It should be understood that the specific embodiments described herein are merely intended to explain the disclosure but not to limit the disclosure. For those skilled in the art, the disclosure may be implemented without some of these specific details. The following description of the embodiments is merely to provide a better understanding of the disclosure by illustrating examples. It should be noted that the acquisition, storage, use, and processing of information and data in the embodiments of the disclosure are all authorized by users or relevant organizations and comply with the relevant provisions of national laws and regulations.

With the continuous development of electronic information, electronic payment has become a mainstream direction in payment technology. Due to the advantages of terminal devices such as mobility, speed, and security, electronic payment processing has shifted from computer processing to terminal device processing. Terminal device operating systems typically come with built-in e-wallets, allowing users to link bank cards for payments. Furthermore, due to the convenience of barcode payments, users may also install payment application programs on their terminal devices to make payments by scanning codes. To expand the usage of the built-in e-wallets on terminal devices, the barcode payment capabilities of payment application programs may be integrated into the e-wallet, allowing users to use these capabilities through the e-wallet. During barcode payments via e-wallets, enhanced user verification is required to control payment security. The decision to enhance verification rests with the entity making the barcode payment, which is the e-wallet, owned by the device manufacturer of the terminal device. However, the lower security level of the device manufacturer increases the risk of enhanced verification and reduces payment security.

The present disclosure provides a method, apparatus, server, system, and medium for enhanced payment verification. It is applied to scenarios where e-wallets in terminal devices use the barcode payment function of embedded payment application programs for payments. Through interaction between the payment transferor server (belonging to the payment transferor) and the e-wallet platform (belonging to the terminal device manufacturer), the decision on enhanced verification during payment is transferred to the payment transfer platform and then to the verification decision platform. Both the payment transfer platform and the verification decision platform belong to the payment transferor, which is responsible for the transfer of payments. The payment transferor's decision on the enhanced verification mode results in a higher security level and lower risk of the enhanced verification, thereby improving payment security.

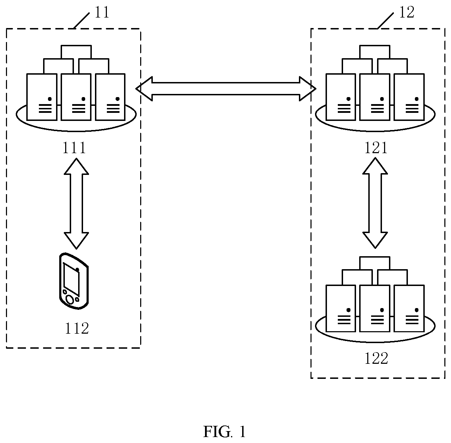

To facilitate understanding, the scenario architectures involved in the disclosure will be first described. FIG. 1 is a schematic diagram of an example scenario architecture of the enhanced payment verification method provided in an embodiment of the first aspect of the disclosure. As shown in FIG. 1, the enhanced payment verification method provided in the embodiment of the disclosure may involve a terminal device manufacturer 11 and a payment transfer party 12. The terminal device manufacturer 11 has an e-wallet platform 111 and a terminal device 112, and the payment transfer party 12 has a payment transfer platform 121 and a verification decision platform 122.

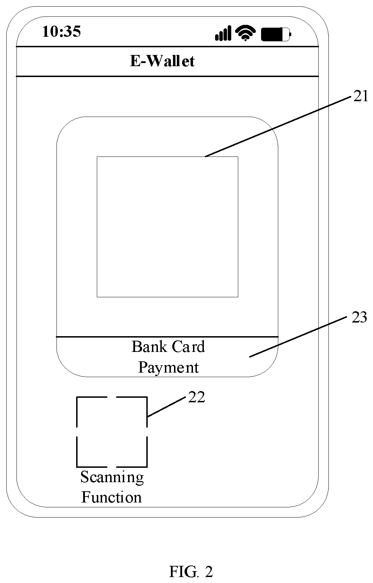

The terminal device 112, manufactured by the terminal device manufacturer 11, includes a built-in e-wallet. The e-wallet platform 111, which includes the backend server for the e-wallet built into the terminal device 112, belongs to the terminal device manufacturer. The e-wallet built into the terminal device 112 may be linked to a user's bank card through user operation, enabling payment via the bank card. The terminal device 112 may interact with e-wallet platform 111 to realize the functionality of the built-in e-wallet. The terminal device 112 may also have a payment application program with barcode payment function installed. In the disclosed embodiment, the e-wallet built into the terminal device 112 may be embedded with the barcode payment function of the payment application program. It should be noted that embedding the barcode payment function of the payment application program into the e-wallet means that the e-wallet may display the payment code of the payment application program and scan the corresponding receiving code of the payment application program; it does not mean jumping from the e-wallet to the payment application program and then using the barcode payment function of the payment application program. For example, FIG. 2 is a schematic diagram of an example of the display interface of an e-wallet provided in an embodiment of the disclosure. As shown in FIG. 2, the display interface of the e-wallet may display the payment code 21 of the payment application program, the scanning function icon 22 for scanning the receiving code of the payment application program, and the payment icon 23 of the linked bank card. The e-wallet a has bank card payment function and a barcode payment function of the payment application program. The embedding of the barcode payment function of the payment application program in the e-wallet may be achieved through the interaction between the e-wallet platform 111 and the payment transfer platform 121. In some embodiments, the payment transfer platform 121 may be configured to issue payment codes or receiving codes, and the embedding of the barcode payment function of the payment application program in the e-wallet may be achieved through the interaction between the e-wallet platform 111 and the payment transfer platform 121. In other embodiments, the payment transfer platform 121 may interact with platforms and devices that issue payment codes or collection codes. This interaction with platforms and devices that issue payment codes or collection codes, along with the interaction between the e-wallet platform 111 and the payment transfer platform 121, enables the embedding of the barcode payment function of the payment application program into the e-wallet. The e-wallet platform 111 may include one or more servers, or other types of devices, which is not limited here. The terminal device 112 may include mobile phones, tablets, smartwatches, smart bracelets, etc., which are not limited herein.

The payment transfer party 12 is responsible for payment transfer. All types of electronic payments should be transferred through the payment transfer party 12. The payment transfer party 12 interacts with the resource management party to enable the resource management party's relevant equipment, such as the resource management server, to deduct and transfer transaction resources, thus completing the payment. The payment transfer platform 121 may be configured to interact with the e-wallet platform 111 and the verification decision platform 122 to transfer the decision-making power for enhanced verification modes to the verification decision platform 122. In the disclosed embodiment, the payment transfer platform 121 may reuse the server used by the payment transfer party 12 to implement transfers for other types of electronic payments, or it may be a newly server established by the payment transfer party 12 and dedicated to implementing the enhanced payment verification method in the present disclosure, which is not limited here. The payment transfer platform 121 may include one or more servers, or may include other types of equipment, which is not limited here.

The verification decision platform 122 may be configured to determine an appropriate enhanced verification mode for payments initiated by the barcode payment function of a payment application program embedded in an e-wallet, so that the e-wallet and the e-wallet platform 111 perform enhanced verification according to the appropriate enhanced verification mode, and complete the payment while ensuring payment security. The verification decision platform 122 may include one or more servers, or other types of devices, which are not limited herein.

The payment transfer platform 121 and the verification decision platform 122 belong to the payment transfer party 12. The security level of the payment transfer party 12 is higher than that of the terminal device manufacturer 11. Correspondingly, the security level of the payment transfer platform 121 and the verification decision platform 122 of the payment transfer party 12 is also higher than that of the e-wallet platform 111 of the terminal device manufacturer 11. Transferring the decision of the enhanced verification mode to the payment transfer party may reduce payment risk and improve payment security.

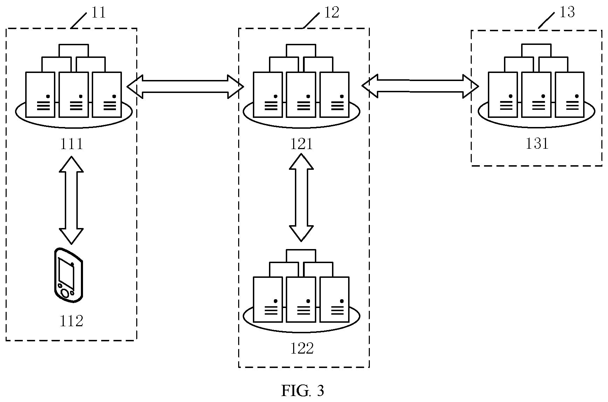

In some embodiments, the enhanced payment verification method provided in the disclosed embodiment may also involve a resource management party, such as a bank. FIG. 3 is a schematic diagram of another example of the scenario architecture of the enhanced payment verification method provided in an embodiment of the disclosure. The difference between FIG. 3 and FIG. 1 is that the enhanced payment verification method in FIG. 3 also involves a resource management party 13, which may have a resource management server 131. The resource management server 131 is configured to implement the deduction and transfer of funds from the user's account during payment. The resource management server 131 may include one or more servers, or other types of devices, which are not limited here.

The following describes the enhanced payment verification method, apparatus, server, system, and medium provided in the present disclosure.

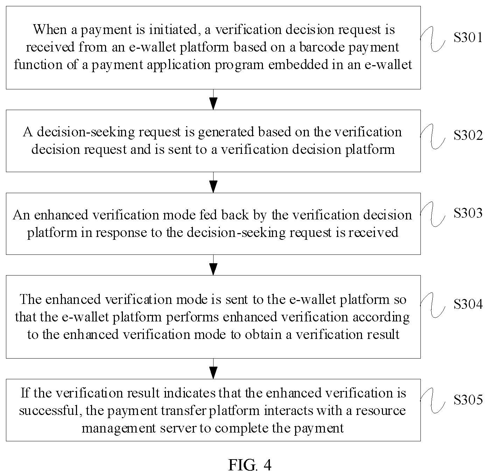

The first aspect of the disclosure provides an enhanced payment verification method, which may be applied to a payment transfer platform, that is, the enhanced payment verification method may be executed by the payment transfer platform. FIG. 4 is a flowchart of an enhanced payment verification method provided in an embodiment of the first aspect of the disclosure. As shown in FIG. 4, the enhanced payment verification method may include steps S301 to S305.

In step S301, when a payment is initiated, a verification decision request is received from an e-wallet platform based on a barcode payment function of a payment application program embedded in an e-wallet.

The initiated payment related to the e-wallet may include a barcode payment function based on a payment application program embedded in the e-wallet and the e-wallet's own existing bank card payment function. When the payment is initiated based on the barcode payment function of the payment application program embedded in the e-wallet, step S301 may be executed. The e-wallet platform sends a verification decision request to the payment transfer platform. This verification decision request is used to request the payment transfer party to make a decision and provide an enhanced verification mode.

In some embodiments, the verification decision request may include end user-associated information. End user-related information includes characteristic information related to the terminal device and the user, which may be collected by the terminal device and the e-wallet platform. The terminal device may send the collected end user-associated information to the e-wallet platform, which then integrates the end user-associated information it has collected with that collected by the terminal device, and sends the verification decision request to the payment transferor, i.e., the payment transfer institution.

Specifically, the end user-associated information may include, but is not limited to, one or more of the following: terminal device information, terminal network environment information, account information, or end-user usage habit information. The terminal device information may include information related to the terminal device. For example, the terminal device information may include one or more of the following: terminal device identifier, terminal device type, terminal device model, or terminal device location. The terminal device location may represent the geographical location of the terminal device and may be obtained from the positioning apparatus in the terminal device. For example, the terminal device location may be the terminal device's global positioning system (GPS) location. The terminal network environment information may include network-related information and operating environment information related to the terminal device. For example, the terminal network environment information may include one or more of the following: a terminal device's Internet protocol (IP) address, e-wallet version information, or terminal device operating system information. The account information may include information related to the user's account in the terminal device's e-wallet. For example, the account information may include one or more of the following: account registration date, user identifier of the registered account, or the account's payment password update timestamp. The end-user usage habit information includes user's habitual use of terminal devices. For example, the end-user usage habit information may include one or more of the following: user's usual time of using the terminal device for payment, the frequency of the user's use of the terminal device for payment, or the usual range of amounts paid by the user using the terminal device.

In step S302, a decision-seeking request is generated based on the verification decision request and sent to a verification decision platform.

The decision-seeking request is used to request, from the verification decision platform, an enhanced verification mode matching the payment initiated by the barcode payment function of the payment application program embedded in the e-wallet. The payment transfer platform may generate the decision-seeking request based on the information in the verification decision request and the information it has collected, and then send the decision-seeking request to the verification decision platform.

In some embodiments, the payment transfer platform may obtain the user transaction-associated information corresponding to the user indicated by the end user-associated information in the payment transfer platform, and generate the decision-seeking request based on the verification decision request and the user transaction-associated information.

The generated decision-seeking request may include end user-associated information and user transaction-associated information. The end user-related information may be found in the relevant explanation above and will not be repeated here. The user transaction-associated information includes user-related characteristic information possessed by the payment transfer party. Specifically, the user transaction-associated information includes one or more of the following: transaction user information, user risk level information, or payment information. The transaction user information includes information related to the user making the payment. For example, the transaction user information may include one or more of the following: user ID number, user attributes, or user registration source. The user risk level information may characterize the user's risk level; the higher the user's risk level, the higher the risk of this payment; the lower the user's risk level, the lower the risk of this payment. The payment information includes information related to the payment; for example, the payment information may include one or more of the following: user's card binding source, payment card number, payment card type, receiving merchant number, payment method, or payment amount.

In step S303, an enhanced verification mode fed back by the verification decision platform in response to the decision-seeking request is received.

After receiving the decision-seeking request, the verification decision platform may assign a corresponding enhanced verification mode to the payment based on the information carried in the decision-seeking request, and then feed the assigned enhanced verification mode back to the payment transfer platform. In some embodiments, the verification decision platform may determine the enhanced verification mode based on the decision-seeking request and preset decision rules; that is, the enhanced verification mode is determined by the verification decision platform based on the decision-seeking request and preset decision rules. The decision rules may reflect the correspondence between the information carried in the decision-seeking request, payment risks, and enhanced verification modes. The verification decision platform may determine the corresponding enhanced verification mode based on the decision rules satisfied by the information carried in the decision-seeking request. In some embodiments, the decision rules may be obtained from a pre-established knowledge base, which may be stored on the verification decision platform or on a server established by another payment transfer party, which is not limited here.

The higher the payment risk associated with the information carried in the decision-seeking request, the higher the security requirements for the corresponding enhanced verification mode. In some embodiments, enhanced verification modes include direct pass without verification, direct termination without verification, or requiring verification. Direct pass without verification means no specific enhanced verification is required; and verification is directly confirmed as successful. Direct pass without verification is an enhanced verification mode corresponding to extremely low payment risk. Direct termination without verification means no specific enhanced verification is required; and verification is directly confirmed as unsuccessful. Direct termination without verification is an enhanced verification mode corresponding to extremely high payment risk. Requiring verification means that specific enhanced verification needs to be performed. The payment risk associated with requiring verification is higher than that associated with direct pass without verification but lower than that associated with direct termination without verification. Verification may include, but is not limited to, one or more of the following: payment password verification, verification code verification, or biometric verification. The payment password verification may refer to identity verification requiring the user to provide a payment password. The verification code verification may refer to identity verification requiring the user to provide a verification code, which may include SMS verification codes or other types of verification codes, which are not limited here. The biometric verification refers to identity verification that requires users to provide biometric features. Biometric features may include one or more of the following: facial image, fingerprint, voiceprint, palm print, or iris scan, which is not limited here. Different types of verification may be used individually or in combination, without limitation.

In step S304, the enhanced verification mode is sent to the e-wallet platform so that the e-wallet platform performs enhanced verification according to the enhanced verification mode to obtain a verification result.

The payment transfer platform sends the enhanced verification mode to the e-wallet platform so that the terminal device manufacturer may determine methods for enhanced verification. This allows the e-wallet platform to interact with the terminal device to perform the enhanced verification and obtain a verification result. The enhanced verification is used to confirm the authenticity of the user's identity. The verification result indicates whether the enhanced verification is successful or not, thus determining whether the user's identity is genuine. Successful enhanced verification indicates the user's identity is genuine, while failed enhanced verification indicates the user's identity is not genuine.

In some embodiments, the e-wallet platform receives the enhanced verification mode and sends a verification command to the terminal device according to the enhanced verification mode. This causes the e-wallet on the terminal device to respond to the verification command, display a verification interface, and collect the verification information entered by the user. The terminal device then sends the collected verification information back to the e-wallet platform. The e-wallet platform receives this verification information and matches it with verification standard information to obtain the verification result. The verification standard information is the real identity information of the user making the payment. If the verification information matches the verification standard information successfully, the verification result indicates that the enhanced verification is successful, the user's identity is genuine, and the payment is secure. If the verification information fails to match the verification standard information, the verification result indicates that the enhanced verification has failed, the user's identity is not genuine, and the payment is insecure. It should be noted that if the matching of the verification information and the verification standard information times out, the verification result indicates that the enhanced verification has failed.

For example, if the enhanced verification mode provided by the verification decision platform includes direct pass without verification, it indicates that the payment transfer party determines that the payment is highly secure. The e-wallet platform may skip specific enhanced verification and default to verification success, notifying the terminal device via a verification command to continue the subsequent payment process and complete the payment. If the enhanced verification mode provided by the verification decision platform includes direct termination without verification, it indicates that the payment transfer party determines that the payment is highly suspicious and carries a significant risk. The e-wallet platform may skip specific enhanced verification and default to verification failure, notifying the terminal device via a verification command to terminate the payment process. If the enhanced verification mode provided by the verification decision platform includes payment password verification in progress, the e-wallet platform notifies the terminal device to perform payment password verification via a verification command. The terminal device displays a payment password verification page, prompting the user to enter their payment password, and sends the entered payment password to the e-wallet platform. The e-wallet platform matches the entered payment password with the pre-stored payment password set by the user to obtain the verification result. If the enhanced verification mode provided by the verification decision platform includes verification code verification, the e-wallet platform will notify the terminal device to perform verification code verification via a verification command. The terminal device may display a verification code verification page, prompting the user to enter an SMS verification code, and send the entered SMS verification code to the e-wallet platform. The e-wallet platform will match the entered SMS verification code with the SMS verification code obtained from the verification code generator to obtain the verification result. If the enhanced verification mode provided by the verification decision platform includes biometric verification, and the biometric verification is facial verification, the e-wallet platform will notify the terminal device to perform facial verification via a verification command. The terminal device may invoke a facial information collection page, collect the user's facial information, and send the collected facial information to the e-wallet platform. The e-wallet platform will match the collected facial information with the user's registered facial information to obtain the verification result. If the enhanced verification mode provided by the verification decision platform includes biometric verification, and the biometric verification is fingerprint verification, the e-wallet platform notifies the terminal device to perform fingerprint verification through a verification command. The terminal device may invoke a fingerprint information collection page, collect the user's fingerprint information, and send the collected fingerprint information to the e-wallet platform. The e-wallet platform matches the collected fingerprint information with the user's registered fingerprint information to obtain the verification result.

In step S305, if the verification result indicates that the enhanced verification is successful, the payment transfer platform interacts with a resource management server to complete the payment.

The payment transfer platform may receive the verification result from the e-wallet platform. If the verification result indicates that the enhanced verification is successful, it means that the payment is secure and the payment process may continue. The payment transfer platform may interact with the resource management server, which will handle the deduction of a payment resource from the payment account and the transfer of the payment resource to the receiving account.

In the disclosed embodiment, when a payment is initiated, the payment transfer platform of the payment transfer party may receive a verification decision request sent by the e-wallet platform based on the barcode payment function of the payment application program embedded in the e-wallet. Based on this verification decision request, the payment transfer platform generates a decision-seeking request and sends the decision-seeking request to the verification decision platform. This allows the verification decision platform to allocate an appropriate enhanced verification mode for the payment based on the decision-seeking request. The payment transfer platform may forward the enhanced verification mode from the verification decision platform to the e-wallet platform, enabling the e-wallet platform to perform enhanced verification according to the enhanced verification mode, verifying the authenticity of the user's identity. If the enhanced verification is successful, the payment process continues to complete the payment. In this process, the implementation of enhanced verification is handled by the terminal device manufacturer's e-wallet platform, but the decision-making regarding the enhanced verification mode is delegated to both the payment transfer platform and the verification decision platform of the payment transfer party. The payment transfer party itself is responsible for the payment transfer, resulting in higher security and stronger risk control. This allows for a higher level of enhanced verification security corresponding to the determined enhanced verification mode, thereby improving payment security.

In some embodiments, before the payment transfer platform receives the verification decision request in step S301 above, the payment transfer platform may also receive a transaction request, which includes a payment identifier and an e-wallet identifier. The transaction request is used to initiate a payment. The e-wallet identifier is used to identify the e-wallet. Different terminal device manufacturers have different e-wallets; that is, different terminal device manufacturers have different e-wallet identifiers. The e-wallet identifier may also be considered as identifying the terminal device manufacturer. The payment identifier may be used to determine the payment method. The payment identifier may include a payment card identifier or a payment application program identifier. If the payment identifier includes a payment card identifier, such as a bank card payment token, it indicates that the payment method is to make a payment using a payment card bound to the e-wallet. If the payment identifier includes a payment application program identifier, it indicates that the payment method is to make a payment using the barcode payment function of a payment application program embedded in the e-wallet. Correspondingly, the payment transfer platform receiving the verification decision request sent by the e-wallet platform based on the barcode payment function of the payment application program embedded in the e-wallet in step S301 above may be further refined as follows: if the payment identifier in the transaction request includes a payment application program identifier, the payment transfer platform receives the verification decision request sent by the e-wallet platform, where the payment application program identifier designates the payment application program. When the payment identifier in the transaction request includes a payment application program identifier, the transaction request also includes a user identifier. The user identifier is used to identify the user to determine the user making the payment during subsequent payment processes. For example, the user identifier may include the user's mobile phone number or other identifiers that may identify the user. In the disclosed embodiment, the payment identifier in the transaction request may distinguish between payment card payments made by the e-wallet itself and barcode payments made by the payment application program embedded in the e-wallet. Only when the payment is a barcode payment made by the payment application program embedded in the e-wallet, the decision on the enhanced verification mode is delegated to the payment transfer platform and the verification decision platform, with the payment transfer party making the decision. When the payment identifier in the transaction request includes a payment card identifier, the e-wallet platform may perform the normal payment process of the e-wallet without delegating the decision on the enhanced verification mode to the payment transfer platform and the verification decision platform.

In some embodiments, after receiving a transaction request, the payment transfer platform may also send transaction information back to the e-wallet platform. This transaction information may include order information for the payment. If the payment is made using a payment card linked to the e-wallet, the payment transfer platform sends order information for the payment card to the e-wallet platform. If the payment is made using the barcode payment function of a payment application program embedded in the e-wallet, the payment transfer platform sends order information for the payment application program to the e-wallet platform. This order information may include payment code, order number, merchant name, order type, etc. For example, in a scanned-to-pay transaction, the order information may include the payment code; in a scanning-to-pay transaction, the order information may include the order number and merchant name.

The barcode payment function of the payment application program embedded in an e-wallet in the above embodiments may include a scanned-to-pay function and a scanning-to-pay function. Under the scanned-to-pay function, the e-wallet of the terminal device may display a payment code, which the payee initiates a payment by scanning the payment code using the merchant's device, which is the scanned-to-pay. Under the scanning-to-pay function, the terminal device may scan the payment code presented by the payee to initiate a payment, which is a scanning-to-pay.

In a scanned-to-pay scenario, before the payment transfer platform receives the transaction request, the e-wallet platform may send a payment code request to the payment transfer platform, to request a payment code. Upon receiving the payment code request sent by the e-wallet platform, the payment transfer platform responds by sending a payment code to the e-wallet platform, enabling the e-wallet platform to provide the payment code to the e-wallet on the terminal device, allowing the e-wallet to display the payment code. The payment code may be generated by the payment transfer platform or obtained by the payment transfer platform from the server used to generate the payment code, which is not limited here. The transaction request is triggered by a merchant device scanning the payment code displayed in the e-wallet on the terminal device, and is sent to the payment transfer platform through the acquiring server. That is, the merchant device scans the payment code displayed in the e-wallet on the terminal device, and the merchant device interacts with the acquiring server, enabling the acquiring server to send the payment transaction request triggered by the payment code to the payment transfer platform.

In a scanning-to-pay scenario, the transaction request is triggered by the e-wallet on the terminal device scanning a QR code, and then sent to the payment transfer platform via the e-wallet platform. That is, the terminal device scans the payee's QR code, triggering a transaction request. The terminal device then sends the transaction request to the e-wallet platform, which in turn sends the transaction request to the payment transfer platform, enabling the payment transfer platform to receive the transaction request. The payee's QR code may be obtained in advance from the payment transfer platform or from the server used to generate the payment code, which is not limited here.

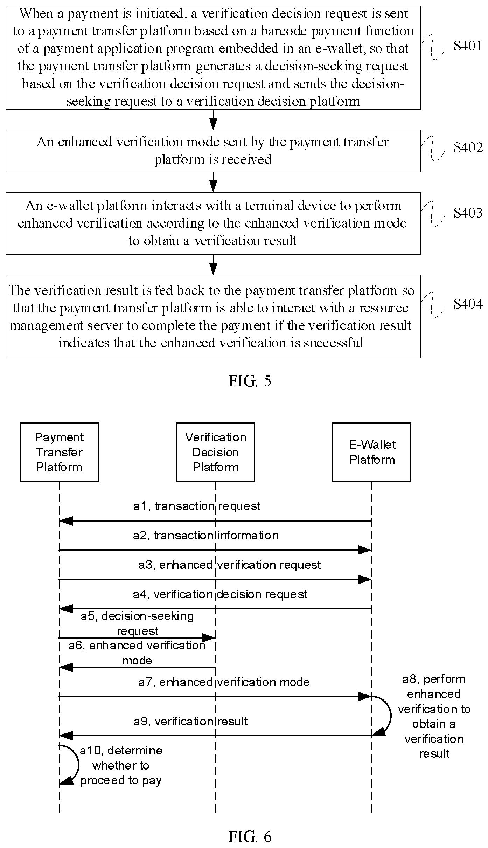

The second aspect of the disclosure provides an enhanced payment verification method, which may be applied to an e-wallet platform; that is, the enhanced payment verification method may be executed by the e-wallet platform. FIG. 5 is a flowchart of an enhanced payment verification method provided in an embodiment of the second aspect of the disclosure. As shown in FIG. 5, the enhanced payment verification method may include steps S401 to S404.

In step S401, when a payment is initiated, a verification decision request is sent to a payment transfer platform based on a barcode payment function of a payment application program embedded in an e-wallet, so that the payment transfer platform generates a decision-seeking request based on the verification decision request and sends the decision-seeking request to a verification decision platform.

In some embodiments, the verification decision request includes end user-associated information. The decision-seeking request includes end user-associated information and user transaction-associated information. The user transaction-associated information corresponds to a user indicated by the end user-associated information in the payment transfer platform.

The end user-associated information may include, but is not limited to, one or more of the following: terminal device information, terminal network environment information, account information, or end user usage habit information. For details, refer to the relevant descriptions in the above embodiments, which will not be repeated here.

The user transaction-associated information may include, but is not limited to, one or more of the following: transaction user information, user risk level information, or payment information. For details, refer to the relevant descriptions in the above embodiments, which will not be repeated here.

In step S402, an enhanced verification mode sent by the payment transfer platform is received.

The enhanced verification mode is determined by the verification decision platform based on the decision-seeking request. Specifically, the enhanced verification mode is determined by the verification decision platform based on the decision-seeking request and preset decision rules. For details, refer to the relevant descriptions in the above embodiments, which will not be repeated here.

In some embodiments, enhanced verification modes include direct pass without verification, direct termination without verification, or requiring verification. Verification includes, but is not limited to, one or more of the following: payment password verification, verification code verification, or biometric verification.

In step S403, the e-wallet platform interacts with the terminal device to perform enhanced verification according to the enhanced verification mode to obtain a verification result.

In step S404, the verification result is fed back to the payment transfer platform so that the payment transfer platform is able to interact with a resource management server to complete the payment if the verification result indicates that the enhanced verification is successful.

The specific details of steps S401 to S404 may be found in the relevant descriptions in the above embodiments, and will not be repeated here.

In the disclosed embodiment, when a payment is initiated, the e-wallet platform sends a verification decision request to the payment transfer platform based on the barcode payment function of the payment application program embedded in the e-wallet. The payment transfer platform then generates a decision-seeking request based on this verification decision request and sends the decision-seeking request to the verification decision platform. The verification decision platform allocates an appropriate enhanced verification mode for the payment based on the decision-seeking request. The e-wallet platform may receive the enhanced verification mode forwarded by the payment transfer platform and perform enhanced verification according to that enhanced verification mode to verify the authenticity of the user's identity. If the enhanced verification is successful, the payment process continues to complete the payment. In this process, the implementation of enhanced verification is handled by the terminal device manufacturer's e-wallet platform, but the decision-making regarding the enhanced verification mode is delegated to the payment transfer platform and the verification decision platform of the payment transfer party. The payment transfer party itself is responsible for the payment transfer, resulting in a higher security level and stronger risk control. This allows for a higher level of enhanced verification security corresponding to the determined enhanced verification mode, thereby improving payment security.

In some embodiments, prior to step S401, the e-wallet platform may also send a transaction request to the payment transfer platform. The transaction request includes a payment identifier and an e-wallet identifier. Correspondingly, the step S401 above, which involves sending a verification decision request to the payment transfer platform based on the barcode payment function of the payment application program embedded in the e-wallet, may be further refined as follows: if the payment identifier in the transaction request includes a payment application program identifier, the verification decision request is sent to the payment transfer platform. If the payment identifier in the transaction request includes a payment application program identifier, the transaction request also includes a user identifier. For details on this part, refer to the relevant descriptions in the above embodiments, which will not be repeated here.

In some embodiments, step S403 may be further refined as follows: sending a verification command to the terminal device according to the enhanced verification mode; receiving verification information collected by the terminal device in response to the verification command; and matching the verification information with verification standard information to obtain a verification result. For details on this part, refer to the relevant descriptions in the above embodiments, which will not be repeated here.

In the above embodiments, payments initiated based on the barcode payment function of a payment application program embedded in an e-wallet may include scanned-to-pay and scanning-to-pay.

In a scanned-to-pay scenario, before the e-wallet platform sends the verification decision request to the payment transfer platform, the e-wallet platform may also send a payment code request to the payment transfer platform; receive a payment code provided by the payment transfer platform in response to the payment code request; and send the payment code to the terminal device so that the e-wallet on the terminal device may display the payment code. For details on this part, refer to the relevant descriptions in the above embodiments, which will not be repeated here.

In a scanning-to-pay scenario, before the e-wallet platform sends the transaction request to the payment transfer platform, the e-wallet platform may also receive a transaction initiation request sent by the terminal device. The transaction initiation request is triggered by the e-wallet in the terminal device scanning the payment code. Correspondingly, the e-wallet platform sending a transaction request to the payment transfer platform may be specifically detailed as follows: in response to the transaction initiation request, the e-wallet platform sends a transaction request to the payment transfer platform. For details on this part, refer to the relevant descriptions in the above embodiments, which will not be repeated here.

For ease of understanding, a specific example is provided below to illustrate the payment process using the enhanced payment verification method among the e-wallet platform, payment transfer platform, and verification decision platform in the disclosed embodiment. FIG. 6 is a flowchart of an example payment process provided in an embodiment of the disclosure. As shown in FIG. 6, the payment process may include steps a1 to a10.

In step a1, the e-wallet platform initiates a transaction request to the payment transfer platform.

In step a2, the payment transfer platform sends transaction information to the e-wallet platform, which may include order information.

In step a3, the payment transfer platform sends an enhanced verification request to the e-wallet platform.

In step a4, the e-wallet platform sends a verification decision request to the payment transfer platform.

In step a5, the payment transfer platform sends a decision-seeking request to the verification decision platform, requesting the verification decision platform to make a decision on the enhanced verification mode.

In step a6, the verification decision platform sends an enhanced verification mode to the payment transfer platform.

In step a7, the payment transfer platform sends the enhanced verification mode to the e-wallet platform.

In step a8, the e-wallet platform performs enhanced verification on the user making the payment according to the enhanced verification mode, and obtains a verification result.

In step a9, the e-wallet platform sends the verification result to the payment transfer platform.

In step a10, the payment transfer platform determines whether to continue the payment based on the verification result.

If the verification result indicates that the enhanced verification is successful, payment will continue; if the verification result indicates that the enhanced verification is unsuccessful, payment will be stopped.

The payment transfer platform may interact with a resource management server to enable the resource management server to complete the payment deduction.

The specific details of steps a1 to a10 above may be found in the relevant descriptions in the above embodiments, and will not be repeated here.

The enhanced payment verification in the disclosed embodiment is mainly used in barcode payment scenarios of the barcode payment function in the payment application program of an e-wallet. Barcode payment may include scanned-to-pay and scanning-to-pay. The scanned-to-pay is often used in scenarios with strict payment time requirements and good merchant qualifications, such as large supermarkets and chain stores. Scanning-to-pay is often used in scenarios such as small and micro merchants' consumption and online payments. The following two specific examples illustrate the scanned-to-pay process and the scanning-to-pay process of the enhanced payment verification method among the e-wallet platform, payment transfer platform, and verification decision platform in the disclosed embodiments.

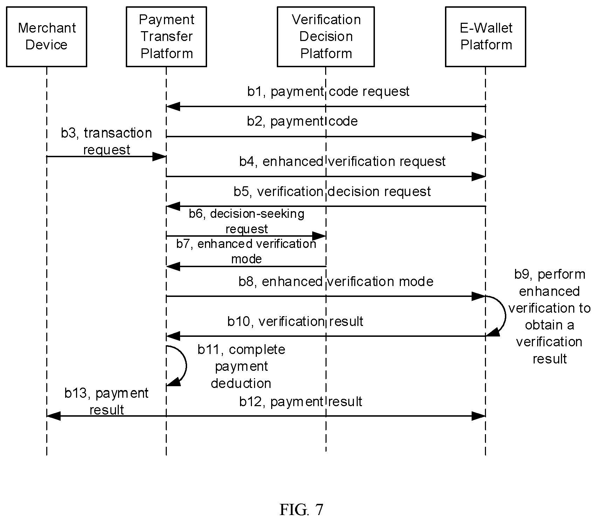

FIG. 7 is a flowchart of an example of a scanned-to-pay process provided in an embodiment of the disclosure. As shown in FIG. 7, the payment process may include steps b1 to b13.

In step b1, the e-wallet platform sends a payment code request to the payment transfer platform.

In step b2, the payment transfer platform sends a payment code to the e-wallet platform so that the e-wallet platform may provide the payment code to the terminal device.

In step b3, the merchant device scans the payment code and initiates a transaction request to the payment transfer platform.

The merchant device may initiate the transaction request directly to the payment transfer platform, or may initiate the transaction request through the acquiring server.

In step b4, the payment transfer platform sends an enhanced verification request to the e-wallet platform.

In step b5, the e-wallet platform sends a verification decision request to the payment transfer platform.

In step b6, the payment transfer platform sends a decision-seeking request to the verification decision platform.

In step b7, the verification decision platform sends an enhanced verification mode to the payment transfer platform.

In step b8, the payment transfer platform sends the enhanced verification mode to the e-wallet platform.

In step b9, the e-wallet platform performs enhanced verification on the user making the payment according to the enhanced verification mode, and obtains a verification result.

In step b10, the e-wallet platform sends the verification result to the payment transfer platform.

In step b11, if the verification result indicates that the enhanced verification is successful, the payment transfer platform may complete the payment deduction.

The payment transfer platform may interact with the resource management server to enable the resource management server to complete the payment deduction.

In step b12, the payment transfer platform sends a payment result back to the e-wallet platform, and the payment result indicates whether the payment was successful.

In step b13, the payment transfer platform sends the payment result back to the merchant's device.

The specific details of steps b1 to b13 above may be found in the relevant descriptions in the above embodiments, and will not be repeated here.

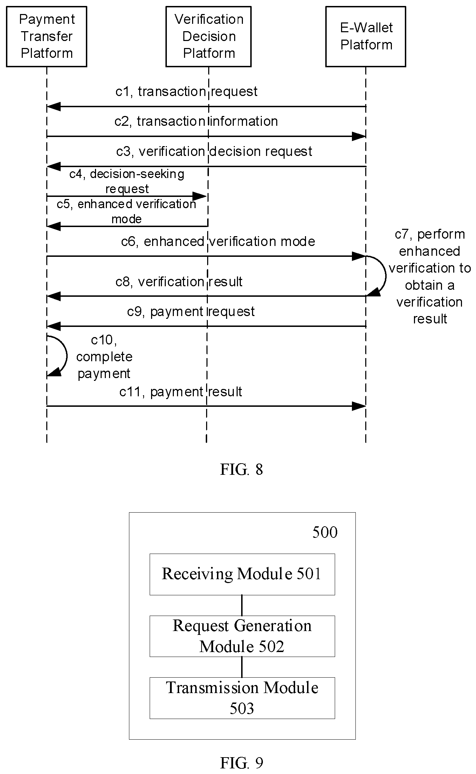

FIG. 8 is a flowchart of an example of the scanning-to-pay process provided in an embodiment of the disclosure. As shown in FIG. 8, the payment process may include steps c1 to c11.

In step c1, the terminal device scans a QR code provided by the payee and initiates a transaction request to the payment transfer platform through the e-wallet platform.

In step c2, the payment transfer platform sends transaction information to the e-wallet platform, which may include order information.

In step c3, the e-wallet platform sends a verification decision request to the payment transfer platform.

In step c4, the payment transfer platform sends a decision-seeking request to the verification decision platform.

In step c5, the verification decision platform sends an enhanced verification mode to the payment transfer platform.

In step c6, the payment transfer platform sends the enhanced verification mode to the e-wallet platform.

In step c7, the e-wallet platform performs enhanced verification on the user making the payment according to the enhanced verification mode and obtains a verification result.

In step c8, the e-wallet platform sends the verification result to the payment transfer platform.

In step c9, if the verification result indicates that the enhanced verification is successful, the terminal device receives the user's input operation, confirms the payment, and sends a payment request to the payment transfer platform through the e-wallet platform.

In step c10, the payment transfer platform completes the payment.

Specifically, the payment transfer platform may interact with the resource management server to enable the resource management server to complete the payment deduction.

In step c11, the payment transfer platform sends the payment result back to the e-wallet platform, and the payment result indicates whether the payment was successful.

The specific details of steps c1 to c11 above may be found in the relevant descriptions in the above embodiments, and will not be repeated here.

The third aspect of the disclosure provides an enhanced payment verification apparatus applied to the payment transfer platform. FIG. 9 is a schematic structural diagram of an enhanced payment verification apparatus provided in an embodiment of the third aspect of the disclosure. As shown in FIG. 9, the enhanced payment verification apparatus 500 may include a receiving module 501, a request generation module 502, and a transmission module 503.

The receiving module 501 may be configured to receive a verification decision request sent by the e-wallet platform based on the barcode payment function of the payment application program embedded in the e-wallet when a payment is initiated. The e-wallet platform includes a back-end server of the e-wallet that comes with the terminal device.

The request generation module 502 may be configured to generate a decision-seeking request based on the verification decision request.

The transmission module 503 may be configured to send the decision-seeking request to the verification decision platform.

The receiving module 501 may also be configured to receive an enhanced verification mode fed back by the verification decision platform in response to the decision-seeking request.

In some embodiments, enhanced verification modes include direct pass without verification, direct termination without verification, or requiring verification. Verification includes one or more of the following: payment password verification, verification code verification, or biometric verification.

The transmission module 503 may also be configured to send the enhanced verification mode to the e-wallet platform, so that the e-wallet platform may perform enhanced verification according to the enhanced verification mode to obtain a verification result.

The transmission module 503 may also be configured to interact with the resource management server to complete the payment if the verification result indicates that the enhanced verification is successful.

In the disclosed embodiment, when a payment is initiated, the payment transfer platform of the payment transfer party may receive a verification decision request sent by the e-wallet platform based on the barcode payment function of the payment application program embedded in the e-wallet. Based on this verification decision request, the payment transfer platform generates a decision-seeking request and sends the decision-seeking request to the verification decision platform. This allows the verification decision platform to allocate an appropriate enhanced verification mode for the payment based on the decision-seeking request. The payment transfer platform may forward the enhanced verification mode from the verification decision platform to the e-wallet platform, enabling the e-wallet platform to perform enhanced verification according to this enhanced verification mode, verifying the authenticity of the user's identity. If the enhanced verification is successful, the payment process continues to complete the payment. In this process, the implementation of enhanced verification is handled by the terminal device manufacturer's e-wallet platform, but the decision on the enhanced verification mode is made by both the payment transfer platform and the verification decision platform of the payment transfer party. The payment transfer party itself is responsible for the payment transfer, resulting in higher security and stronger risk control. This allows for a higher level of enhanced verification security corresponding to the determined enhanced verification mode, thereby improving payment security.

In some embodiments, the receiving module 501 may also be configured to: receive a transaction request, the transaction request including a payment identifier and an e-wallet identifier.

The receiving module 501 may be configured to: receive a verification decision request sent by the e-wallet platform when the payment identifier in the transaction request includes a payment application program identifier. The payment application program identifier indicates the payment application program, and the transaction request also includes a user identifier.

In some embodiments, the verification decision request includes end user-associated information. The request generation module 502 may be configured to: obtain the user transaction-associated information corresponding to the user indicated by the end user-associated information in the payment transfer platform; and generate the decision-seeking request based on the verification decision request and the user transaction-associated information, the decision-seeking request including the end user-associated information and the user transaction-associated information.

In some embodiments, the end user-associated information includes one or more of the following: terminal device information, terminal network environment information, account information, or end-user usage habit information.

In some embodiments, the user transaction-associated information includes one or more of the following: transaction user information, user risk level information, or payment information.

In some embodiments, a transaction request is triggered by the merchant device scanning the payment code displayed in the e-wallet on the terminal device and is sent to the payment transfer platform through the acquiring server.

The receiving module 501 may also be configured to receive a payment code request sent by the e-wallet platform.

The transmission module 503 may also be configured to: send a payment code to the e-wallet platform in response to the payment code request, so that the e-wallet platform provides the payment code to the e-wallet in the terminal device.

In some embodiments, the transaction request is triggered by scanning a QR code in the e-wallet of the terminal device and is sent to the payment transfer platform through the e-wallet platform.

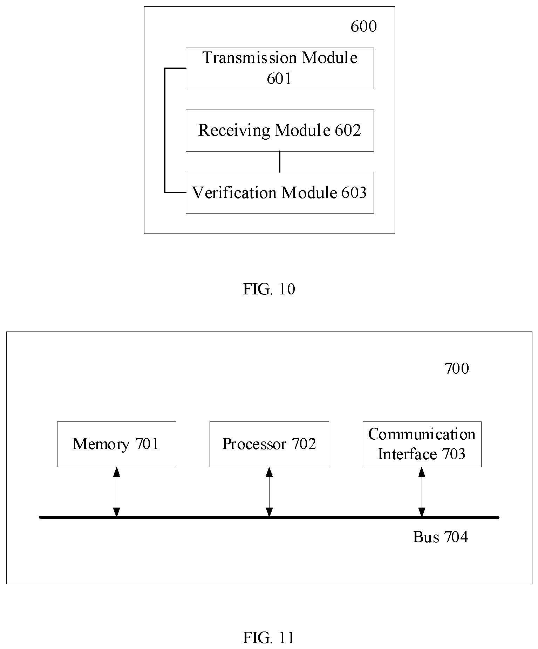

The fourth aspect of the disclosure provides an enhanced payment verification apparatus applied to the e-wallet platform, the e-wallet platform including a backend server for the e-wallet built into a terminal device. FIG. 10 is a schematic structural diagram of the enhanced payment verification apparatus provided in an embodiment of the fourth aspect of the disclosure. As shown in FIG. 10, the enhanced payment verification apparatus 600 may include a transmission module 601, a receiving module 602, and a verification module 603.

The transmission module 601 may be configured to send a verification decision request to the payment transfer platform based on the barcode payment function of the payment application program embedded in the e-wallet when a payment is initiated, so that the payment transfer platform may generate a decision-seeking request based on the verification decision request and send the decision-seeking request to the verification decision platform.

In some embodiments, the verification decision request includes end user-associated information. The decision-seeking request includes the end user-associated information and user transaction-associated information, which corresponds to the user indicated by the end user-associated information in the payment transfer platform.

In some embodiments, the end user-associated information includes one or more of the following: terminal device information, terminal network environment information, account information, or end-user usage habit information. The user transaction-associated information includes one or more of the following: transaction user information, user risk level information, or payment information.

The receiving module 602 may be configured to receive an enhanced verification mode sent by the payment transfer platform. The enhanced verification mode is determined by the verification decision platform based on the decision-seeking request.

In some embodiments, the enhanced verification mode is characterized by including direct access without verification, direct termination without verification, or requiring verification. Verification includes one or more of the following: payment password verification, verification code verification, or biometric verification.

The verification module 603 may be configured to interact with the terminal device, perform enhanced verification according to the enhanced verification mode, and obtain a verification result.

The transmission module 601 may also be configured to send the verification result back to the payment transfer platform, so that the payment transfer platform may interact with the resource management server to complete the payment if the verification result indicates that the enhanced verification is successful.

In the disclosed embodiment, when a payment is initiated, the e-wallet platform sends a verification decision request to the payment transfer platform based on the barcode payment function of the payment application program embedded in the e-wallet. The payment transfer platform then generates a decision-seeking request based on this verification decision request and sends the decision-seeking request to the verification decision platform. The verification decision platform allocates an appropriate enhanced verification mode for the payment based on the decision-seeking request. The e-wallet platform may receive the enhanced verification mode forwarded by the payment transfer platform and perform enhanced verification according to the enhanced verification mode to verify the authenticity of the user's identity. If the enhanced verification is successful, the payment process continues to complete the payment. In this process, the implementation of enhanced verification is handled by the terminal device manufacturer's e-wallet platform, but the decision-making regarding the enhanced verification mode is delegated to the payment transfer platform and the verification decision platform of the payment transfer party. The payment transfer party itself is responsible for the payment transfer, resulting in a higher security level and stronger risk control. This allows for a higher level of enhanced verification security corresponding to the determined enhanced verification mode, thereby improving payment security.

In some embodiments, the transmission module 601 may also be configured to: send a transaction request to the payment transfer platform, the transaction request including a payment identifier and an e-wallet identifier.

The transmission module 601 may be specifically configured to: send the verification decision request to the payment transfer platform when the payment identifier in the transaction request includes a payment application program identifier, and the transaction request also includes a user identifier.

In some embodiments, the verification module 603 may be specifically configured to send a verification command to the terminal device according to the enhanced verification mode.

The receiving module 602 may be specifically configured to receive verification information collected by the terminal device in response to the verification command.

The verification module 603 may be specifically configured to match verification information with verification standard information to obtain a verification result.

In some embodiments, the transmission module 601 is further configured to send a payment code request to the payment transfer platform.

The receiving module 602 may also be configured to receive a payment code provided by the payment transfer platform in response to the payment code request.

The transmission module 601 may also be configured to send the payment code to the terminal device so that the e-wallet in the terminal device may display the payment code.

In some embodiments, the receiving module 602 may also be configured to receive a transaction initiation request sent by the terminal device. The transaction initiation request is triggered by the e-wallet in the terminal device scanning the payment code.

The transmission module 601 may be specifically configured to send the transaction request to the payment transfer platform in response to the transaction initiation request.

The fifth aspect of the disclosure provides a server applied to the payment transfer platform. FIG. 11 is a schematic structural diagram of a server provided in an embodiment of the fifth aspect of the disclosure. As shown in FIG. 11, the server 700 includes a memory 701, a processor 702, and a computer program stored in the memory 701 and executable on the processor 702.

In some embodiments, the processor 702 described above may include a central processing unit (CPU), or an application-specific integrated circuit (ASIC), or one or more integrated circuits that may be configured to implement the embodiments of the disclosure.

The memory 701 may include read-only memory (ROM), random access memory (RAM), disk storage media device, optical storage media device, flash memory device, electrical, optical, or other physical/tangible memory storage device. Therefore, typically, the memory includes one or more tangible (non-transitory) computer-readable storage media (e.g., memory device) encoded with software including computer-executable instructions, and when the software is executed (e.g., by one or more processors), it is operable to perform the operations described with reference to the enhanced payment verification method according to the first aspect of the disclosure of the disclosure.

The processor 702 runs a computer program corresponding to the executable program code stored in the memory 701 to implement the enhanced payment verification method in the first aspect of the disclosure described above.

In some embodiments, the server 700 may also include a communication interface 703 and a bus 704. As shown in FIG. 11, the memory 701, the processor 702, and the communication interface 703 are connected via the bus 704 and communicate with each other.

The communication interface 703 is mainly configured to enable communication between various modules, devices, units, and/or equipment in the embodiments of the disclosure. Input devices and/or output devices may also be connected through the communication interface 703.

The bus 704 includes hardware, software, or both, that couple the components of the server 700 together. For example, and not limitingly, the bus 704 may include an accelerated graphics port (AGP) or other graphics bus, an enhanced industry standard architecture (EISA) bus, a front side bus (FSB), a hyper transport (HT) interconnect, an industry standard architecture (ISA) bus, an infinite bandwidth interconnect, a low pin count (LPC) bus, a memory bus, a micro channel architecture (MCA) bus, a peripheral component interconnect (PCI) bus, a PCI-express (PCI-E) bus, a serial advanced technology attachment (SATA) bus, a video electronics standards association local bus (VLB) bus, or other suitable buses, or a combination of two or more of these. Where appropriate, the bus 704 may include one or more buses. Although specific buses are described and illustrated in the embodiments of the disclosure, the disclosure considers any suitable bus or interconnection.

The sixth aspect of the disclosure provides a server for use in an e-wallet platform. The server includes a memory, a processor, and a computer program stored in the memory and executable on the processor.

The memory includes one or more tangible (non-transitory) computer-readable storage media (e.g., memory device) encoded with software including computer-executable instructions, and when the software is executed (e.g., by one or more processors), it is operable to perform operations described with reference to the enhanced payment verification method according to the second aspect of the present disclosure.

The processor runs a computer program corresponding to the executable program code by reading the executable program code stored in the memory, in order to implement the enhanced payment verification method in the second aspect of the disclosure described above.

In some embodiments, the server may also include a communication interface and a bus. The memory, processor, and communication interface are connected via the bus and communicate with each other.

The connections between the memory, the processor, the communication interface, and the bus applied to the server in the e-wallet platform and other content, refer to the server shown in FIG. 11 and related descriptions, which will not be repeated here.

The seventh aspect of the disclosure also provides an enhanced payment verification system, which may include the payment transfer platform and the e-wallet platform described in the above embodiments. The payment transfer platform may execute the enhanced payment verification method described in the first aspect of the disclosure. The e-wallet platform may execute the enhanced payment verification method described in the second aspect of the disclosure. For details, refer to the relevant descriptions in the above embodiments, which achieve similar technical effects; therefore, to avoid repetition, they will not be repeated here.

In some embodiments, the enhanced payment verification system may further include a verification decision platform. The verification decision platform may be configured to respond to a decision-seeking request sent by the payment transfer platform and feed an enhanced verification mode that matches the decision-seeking request back to the payment transfer platform. For details, refer to the relevant descriptions in the above embodiments, which achieve similar technical effects; therefore, to avoid repetition, they will not be repeated here.

The eighth aspect of the disclosure also provides a computer-readable storage medium storing computer program instructions. When executed by a processor, these computer program instructions may implement the enhanced payment verification method in the first aspect of the disclosure or the enhanced payment verification method in the second aspect of the disclosure, achieving similar technical effects. To avoid repetition, further details are omitted here. The aforementioned computer-readable storage medium may include non-transitory computer-readable storage media, such as ROM, RAM, magnetic disk, or optical disk, etc., and is not limited thereto.

The embodiments of the disclosure may also provide a computer program product, in which the instructions are executed by the processor of an electronic device, enabling the electronic device to perform the enhanced payment verification method in the first aspect of the disclosure or the enhanced payment verification method in the second aspect of the disclosure, and achieve similar technical effects. To avoid repetition, it will not be described again here.

It should be clarified that the various embodiments in this specification are described in a progressive manner, and the same or similar parts between the various embodiments may be referred to mutually. Each embodiment focuses on describing the differences from other embodiments. For the apparatus embodiments, server embodiments, system embodiments, computer-readable storage medium embodiments, and computer program product embodiments, the relevant parts may refer to the description section of the method embodiments. The present disclosure is not limited to the specific steps and structures described above and shown in the figures. Those skilled in the art may make various changes, modifications, and additions, or change the order of steps, after understanding the spirit of the disclosure. Furthermore, for the sake of brevity, detailed descriptions of known methods and techniques are omitted here.

Various aspects of the disclosure have been described above with reference to flowcharts and/or block diagrams of methods, apparatus (systems), and computer program products according to embodiments of the disclosure. It should be understood that each block in the flowcharts and/or block diagrams, and combinations of blocks in the flowcharts and/or block diagrams, may be implemented by computer program instructions. These computer program instructions may be provided to a processor of a general-purpose computer, a special-purpose computer, or other programmable data processing apparatus to produce a machine such that these instructions, executable via the processor of the computer or other programmable data processing apparatus, enable the implementation of the functions/actions specified in one or more blocks of the flowcharts and/or block diagrams. Such a processor may be, but is not limited to, a general-purpose processor, a special-purpose processor, a special application processor, or a field-programmable logic circuit. It is also understood that each block in the block diagrams and/or flowcharts, and combinations of blocks in the block diagrams and/or flowcharts, may also be implemented by dedicated hardware performing the specified functions or actions, or may be implemented by a combination of dedicated hardware and computer instructions.

Those skilled in the art will understand that the above embodiments are exemplary and not limiting. Different technical features appearing in different embodiments may be combined to achieve beneficial effects. Based on an understanding of the drawings, specification, and claims, those skilled in the art should be able to understand and implement other variations of the disclosed embodiments. In the claims, the term "comprising" does not exclude other means or steps; the term "a" does not exclude a plurality; the terms "first" and "second" are configured to identify names and not to indicate any particular order. No reference numerals in the claims should be construed as limiting the scope of protection. The functionality of multiple parts appearing in the claims may be implemented by a single hardware or software module. The appearance of certain technical features in different dependent claims does not mean that these technical features cannot be combined to achieve beneficial effects.

## Claims

1. An enhanced payment verification method, applied to a payment transfer platform, the method comprising:
when a payment is initiated, receiving a verification decision request from an e-wallet platform based on a barcode payment function of a payment application program embedded in an e-wallet, the e-wallet platform including a backend server of the e-wallet that is built into a terminal device;
based on the verification decision request, generating a decision-seeking request and sending the decision-seeking request to a verification decision platform;
receiving an enhanced verification mode fed back by the verification decision platform in response to the decision-seeking request;
sending the enhanced verification mode to the e-wallet platform so that the e-wallet platform performs enhanced verification according to the enhanced verification mode to obtain a verification result; and
when the verification result indicates that the enhanced verification is successful, interacting with a resource management server to complete the payment.

2. The method according to claim 1, wherein, before receiving the verification decision request sent by the e-wallet platform based on the barcode payment function of the payment application program embedded in the e-wallet, the method further comprises:
receiving a transaction request, the transaction request including a payment identifier and an e-wallet identifier; and
receiving the verification decision request sent by the e-wallet platform based on the barcode payment function of the payment application program embedded in the e-wallet includes:
when the payment identifier in the transaction request includes a payment application program identifier, receiving the verification decision request sent by the e-wallet platform, the payment application program identifier designating the payment application program, and the transaction request further including a user identifier.

3. The method according to claim 1, wherein the verification decision request includes end user-associated information, and generating the decision-seeking request based on the verification decision request comprises:
obtaining user transaction-associated information corresponding to a user indicated by the end user-associated information in the payment transfer platform; and
generating the decision-seeking request based on the verification decision request and the user transaction-associated information, the decision-seeking request including the end user-associated information and the user transaction-associated information.

4. The method according to claim 3, wherein:
the end user-associated information includes one or more of the following: terminal device information, terminal network environment information, account information, or end user usage habit information; and
the user transaction-associated information includes one or more of the following: transaction user information, user risk level information, or payment information.

5. The method according to claim 2, wherein the transaction request is triggered by a merchant device scanning a payment code displayed in the e-wallet of the terminal device, and is sent to the payment transfer platform through an acquiring server, and before receiving the transaction request, the method further comprises:
receiving a payment code request sent by the e-wallet platform; and
in response to the payment code request, sending the payment code to the e-wallet platform so that the e-wallet platform provides the payment code to the e-wallet in the terminal device.

6. The method according to claim 2, wherein the transaction request is triggered by the e-wallet in the terminal device scanning a payment code, and is sent to the payment transfer platform through the e-wallet platform.

7. The method according to any one of claims 1 to 6, wherein:
the enhanced verification mode includes direct pass without verification, direct termination without verification, or requiring verification; and
the verification includes one or more of the following: payment password verification, verification code verification, or biometric verification.

8. An enhanced payment verification method, applied to an e-wallet platform, the e-wallet platform including a backend server for an e-wallet built into a terminal device, the method comprising:
when a payment is initiated, sending a verification decision request to a payment transfer platform based on a barcode payment function of a payment application program embedded in the e-wallet, so that the payment transfer platform generates a decision-seeking request based on the verification decision request and sends the decision-seeking request to a verification decision platform;
receiving an enhanced verification mode sent by the payment transfer platform, wherein the enhanced verification mode is determined by the verification decision platform based on the decision-seeking request;
interacting with the terminal device and performing enhanced verification according to the enhanced verification mode to obtain a verification result; and
feeding back the verification result to the payment transfer platform so that the payment transfer platform is able to interact with a resource management server to complete the payment if the verification result indicates that the enhanced verification is successful.

9. The method according to claim 8, wherein, before sending the verification decision request to the payment transfer platform based on the barcode payment function of the payment application program embedded in the e-wallet, the method further comprises:
sending a transaction request to the payment transfer platform, the transaction request including a payment identifier and an e-wallet identifier; and
sending the verification decision request to the payment transfer platform based on the barcode payment function of the payment application program embedded in the e-wallet includes:
when the payment identifier in the transaction request includes a payment application program identifier, sending the verification decision request to the payment transfer platform, the transaction request also including a user identifier.

10. The method according to claim 8, wherein:
the verification decision request includes end user-associated information, and the decision-seeking request includes the end user-associated information and user transaction-associated information, wherein the user transaction-associated information corresponds to a user indicated by the end user-associated information in the payment transfer platform.

11. The method according to claim 10, wherein:
the end user-associated information includes one or more of the following: terminal device information, terminal network environment information, account information, or end user usage habit information; and
the user transaction-associated information includes one or more of the following: transaction user information, user risk level information, or payment information.

12. The method according to claim 8, wherein interacting with the terminal device and performing the enhanced verification according to the enhanced verification mode to obtain the verification result comprises:
sending a verification command to the terminal device according to the enhanced verification mode;
receiving verification information collected by the terminal device in response to the verification command; and
matching the verification information with verification standard information to obtain the verification result.

13. The method according to claim 8, wherein, before sending the verification decision request to the payment transfer platform, the method further comprises:
sending a payment code request to the payment transfer platform;
receiving a payment code provided by the payment transfer platform in response to the payment code request; and
sending the payment code to the terminal device so that the e-wallet in the terminal device displays the payment code.

14. The method according to claim 9, wherein, before sending the transaction request to the payment transfer platform, the method further comprises:
receiving a transaction initiation request sent by the terminal device, the transaction initiation request being triggered by the e-wallet in the terminal device scanning a payment code; and
sending the transaction request to the payment transfer platform includes:
in response to the transaction initiation request, sending the transaction request to the payment transfer platform.

15. The method according to any one of claims 8 to 14, wherein:
the enhanced verification mode includes direct pass without verification, direct termination without verification, or requiring verification; and
the verification includes one or more of the following: payment password verification, verification code verification, or biometric verification.

16. An enhanced payment verification apparatus, applied to a payment transfer platform, the apparatus comprising:
a receiving module, configured to receive a verification decision request sent by an e-wallet platform based on a barcode payment function of a payment application program embedded in an e-wallet when a payment is initiated, the e-wallet platform including a backend server of the e-wallet built into a terminal device;
a request generation module, configured to generate a decision-seeking request based on the verification decision request; and
a transmission module, configured to send the decision-seeking request to a verification decision platform,
wherein:
the receiving module is further configured to receive an enhanced verification mode fed back by the verification decision platform in response to the decision-seeking request,
the transmission module is further configured to send the enhanced verification mode to the e-wallet platform, so that the e-wallet platform performs enhanced verification according to the enhanced verification mode to obtain a verification result, and
the transmission module is further configured to interact with a resource management server to complete the payment if the verification result indicates that the enhanced verification is successful.

17. An enhanced payment verification apparatus, applied to an e-wallet platform, the e-wallet platform including a backend server for an e-wallet built into a terminal device, the apparatus comprising:
a transmission module, configured to send a verification decision request to a payment transfer platform based on a barcode payment function of a payment application program embedded in the e-wallet when a payment is initiated, so that the payment transfer platform generates a decision-seeking request based on the verification decision request and sends the decision-seeking request to a verification decision platform;
a receiving module, configured to receive an enhanced verification mode sent by the payment transfer platform, wherein the enhanced verification mode is determined by the verification decision platform according to the decision-seeking request; and
a verification module, configured to interact with the terminal device and perform enhanced verification according to the enhanced verification mode to obtain a verification result,
wherein the transmission module is further configured to send the verification result back to the payment transfer platform, so that the payment transfer platform is able to interact with a resource management server to complete the payment when the verification result indicates that the enhanced verification is successful.

18. A server applied to a payment transfer platform, the server comprising: a processor and a memory storing computer program instructions, wherein the processor, when executing the computer program instructions, implements the enhanced payment verification method according to any one of claims 1 to 7.

19. A server applied to an e-wallet platform, the server comprising: a processor and a memory storing computer program instructions, wherein the processor, when executing the computer program instructions, implements the enhanced payment verification method according to any one of claims 8 to 15.

20. A payment enhancement verification system, comprising:
the payment transfer platform, configured to execute the enhanced payment verification method according to any one of claims 1 to 7; and
the e-wallet platform, configured to execute the enhanced payment verification method according to any one of claims 8 to 15.

21. The system according to claim 20, further comprising:
the verification decision platform, configured to, in response to the decision-seeking request sent by the payment transfer platform, feed back the enhanced verification mode matching the decision-seeking request to the payment transfer platform.

22. A computer-readable storage medium storing computer program instructions that, when executed by a processor, implement the enhanced payment verification method according to any one of claims 1 to 15.
